(19)

**Europäisches Patentamt**
**European Patent Office**
**Office européen des brevets**

(11) **EP 4 347 262 B1**

(12) **EUROPEAN PATENT SPECIFICATION**

(45) Date of publication and mention
of the grant of the patent:
**10.09.2025   Bulletin 2025/37**

(21) Application number: **22733769.8**

(22) Date of filing: **10.05.2022**

(51) International Patent Classification (IPC):
**B32B 43/00** (2006.01)       **B29B 17/02** (2006.01)

(52) Cooperative Patent Classification (CPC):
**C08J 5/18; B29B 17/02; B32B 7/06;**
**B32B 17/1055; B32B 17/10577; B32B 17/10761;**
**B32B 27/08; B32B 27/22; B32B 27/306;**
**B32B 27/36; B32B 27/42; B32B 43/006;**
**C08J 3/005;** B29B 2017/0217; B29B 2017/022;
(Cont.)

(86) International application number:
**PCT/US2022/028425**

(87) International publication number:
**WO 2022/250944 (01.12.2022 Gazette 2022/48)**

(54) **METHOD FOR MECHANICAL SEPARATION OF MULTILAYER INTERLAYERS**

VERFAHREN ZUR MECHANISCHEN TRENNUNG VON MEHRSCHICHTIGEN
ZWISCHENSCHICHTEN

PROCÉDÉ DE SÉPARATION MÉCANIQUE DE COUCHES INTERMÉDIAIRES MULTICOUCHES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **28.05.2021   US 202163194295 P**
**17.03.2022   US 202263320735 P**

(43) Date of publication of application:
**10.04.2024   Bulletin 2024/15**

(73) Proprietor: **Solutia Inc.**
**St. Louis, Missouri 63141 (US)**

(72) Inventors:
• **SOHN, Sungkyun**
**Longmeadow, MA 01106 (US)**
• **MATIS, Gary**
**Wilbraham, MA 01095 (US)**
• **KEEN, Nicholas, Edward**
**Bristol, TN 37620 (US)**
• **STRICKLER, Michael, Lee**
**Kingsport, TN 37660 (US)**

(74) Representative: **Kraus & Lederer PartGmbB**
**Thomas-Wimmer-Ring 15**
**80539 München (DE)**

(56) References cited:
WO-A1-2010/038697       JP-B2- 4 205 889
US-A- 4 394 416             US-A- 5 520 776
US-A1- 2014 299 278      US-A1- 2018 178 458

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B29C 48/022; B29C 48/08; B29C 48/21;
B29C 48/277; B29K 2029/00; B29K 2029/14;
B29K 2105/26; B32B 2250/04; B32B 2250/24;
B32B 2250/40; B32B 2270/00; B32B 2307/538;
B32B 2329/06; C08J 2329/14; Y02W 30/62

**Description**

Multilayer interlayers have an ever-increasing share in the interlayer market but have limited recyclability in the extrusion process, since the different layers may have different physicochemical properties. Acoustic core layers especially do not mix well with the two skin layer materials during extrusion, forming small but discrete domains of core material that cause a certain level of haze, limiting its content in extrusion. The inability to rework this multilayer material is a significant economic loss.

It is possible to manually peel off a skin layer from a multi-layer sheet to demonstrate the concept of mechanical separation. However, improved processes and mechanical devices would be helpful for a stable, consistent, and cost-efficient mechanical separation operation.

U.S. Pat. No. 5,368,978 discloses a method of delaminating imaging materials comprising providing an imaging material comprising donor and receiver elements, heating said imaging material, applying opposed forces to said donor and receiver elements to separate said imaging material into donor and receiver elements, and accumulating the separated donor element. In a preferred method, one or both of said opposed forces is vacuum and when the vacuum is released from said donor element, accumulating takes place by spooling after separation. The apparatus for delamination of imaging materials comprises means for applying heat and pressure to said imaging material, means to apply a separating force to at least one of said donor element and receiver element forming said imaging material and means to separate said donor element and said receiver element. In a preferred embodiment the apparatus further comprises means to spool said donor element and means to preheat said imaging material prior to applying said separating force.

U.S. Pat. No. 5,934,577 discloses a process for separating the constituents of a multilayer material including at least one layer of a base plastic (A) and a layer of a plastic (B) which are separated by a layer of adhesive plastic (C), in which: (1) the material is heated to a temperature T1 between the crystallization temperature of the plastic B (Tc) and Tc-20°C., (2) the material is next shredded by being subjected to shearing, at approximately the same temperature, so as to produce delamination and thus to convert the material into particles of small dimensions of two types, some (X) consisting essentially of base plastic (A) and others (Y) consisting essentially of plastic B and of adhesive plastic (C), and (3) the particles X and Y are subsequently separated by electrostatic separation.

U.S. Pat. No. 10,513,102 discloses a peeling apparatus that includes: a conveyance roller configured to convey a laminate made by peelably laminating a first substrate and a second substrate including an opening; a peel roller arranged facing the conveyance roller with the laminate interposed in between, and configured to peel the second substrate from the first substrate; a winding roller arranged away from the peel roller, and configured to wind the second substrate peeled from the first substrate; and an auxiliary winding roller arranged between the peel roller and the winding roller, and including a stepped portion configured to maintain a width of the opening.

US 2020/0147933 A1 discloses a method for recycling an intermediate film for laminated glass, comprising a step of separating a layer comprising an A layer and a layer comprising a B layer from the intermediate film for laminated glass (1) comprising at least the A layer and the B layer.

WO 2010/038697 A1 relates to a method for peeling a substrate-less double-sided pressure-sensitive adhesive sheet, a method for producing an optical film, a film peeling mechanism, and an optical film manufacturing apparatus.

US 2014/299278 A1 relates to a method and an apparatus for removing matrix material from a web of cut adhesive backed labels.

US 4 394 416 A relates to a film-paper fiber layer laminate and a process for the preparation thereof.

US 2018/178458 A1 relates to a method for manufacturing a single-sided metal-clad laminate suitably used in a flexible printed circuit board.

US 5 520 776 A relates to a delamination method and apparatus for delaminating a composite sheet structure comprising a plurality of selectively releasable superposed sheets.

JP 4 205 889 B2 relates to a manufacturing method for a laminated sheet constituted by continuously laminating a metal foil to a heat-resistant film.

There remains a need for methods and devices for separating layers of multilayer interlayers to facilitate rework of the material in manufacturing processes. There likewise remains a need to obtain polymer sheets, and especially PVB sheets, that have a smoother surface than can be obtained using traditional extrusion techniques.

## SUMMARY OF INVENTION

The invention relates to a continuous process for separating a first layer from a remainder of a multilayer interlayer sheet comprising a multilayer PVB interlayer, the process comprising

    a. heating the multilayer sheet; and
    b. thereafter separating the first layer from the remainder of the multilayer interlayer sheet by pulling the first layer and the remainder of the multilayer interlayer sheet in different directions,

wherein an angle $\alpha$ defined by the first layer and the multilayer sheet at the separation point is smaller than or equal to an angle $\beta$ defined by the multilayer sheet and the remainder of the multilayer sheet at the separation point, during the continuous process.

Further aspects of the invention are as disclosed herein and claimed in the appended claims.

## BRIEF DESCRIPTION OF THE DRAWINGS

**Fig. 1** is a schematic illustration of a method of mechanically recycling a multi-layer interlayer
**Fig. 2** is a schematic illustration of a device disclosed herein for mechanical separation of a multi-layer interlayer.
**Fig. 3** is a schematic illustration of the proper orientation of the film while being separated.

## DETAILED DESCRIPTION

The separation processes according to the invention may be described herein as continuous, but the word "continuous" is not intended to be especially limited. One skilled in the art of industrial processes will understand that continuous processes may be distinguished from batch processes, and that the longer a process is able to be maintained continuously, the greater the advantage in terms of throughput. Thus, an advantage of the processes of the invention is that, in steady state, a multilayer sheet roll may be continuously separated for a significant period of time and that, according to the present disclosure, one skilled in the art is enabled to adjust the processes to maintain a desired continuity in carrying them out.

Other embodiments are as disclosed and claimed herein.

Thus, while not encompassed by the wording of the claims, the present disclosure relates to methods and may use devices to separate two layers of a multilayer interlayer by (i) unwinding the interlayer from a roller; (ii) heating the interlayer with one or more heated rollers and/or a separate IR heater (iii) peeling away the first, or skin, layer under a separation force; and (iii) collecting the separated skin layer and the remainder of the multilayer sheet for subsequent re-use as an interlayer component.

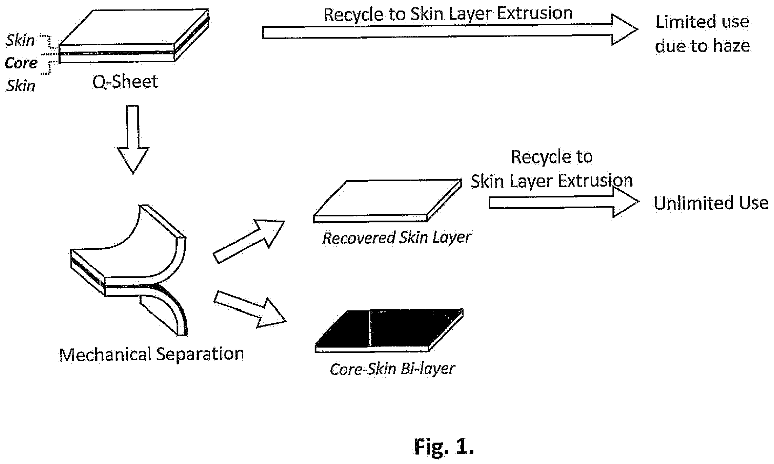

In another aspect, not encompassed by the wording of the claims, the present disclosure relates to the design of a method and may use a device, in which the core and skin materials of multilayer interlayers, for example up to 1.4 m in roll width and 500 kg in roll weight, are separated by mechanically peeling off one skin layer at 2-20 m/min rate, for example, which allows re-use of the recovered skin layer in extrusion. See Fig. 1, which depicts an interlayer having a core layer and two skin layers.

This invention thus relates to methods and may use devices that are capable of mechanically separating a first or skin layer from multilayer interlayer sheets (e.g. Eastman's Saflex™ PVB Interlayers). The goal is thus to mechanically separate one skin layer from a core-skin bi-layer of acoustic tri-layer interlayers, but the scope of processible materials for the device disclosed herein is not limited to the tri-layers, but includes multilayer interlayers, in which the number of layers is more than 2, or more than 3, or more than 5, or 5 or more, either in part or in whole in cross-machine direction of the sheet. In any case, the separation typically takes place between the skin layer adjacent to the acoustic core layer, and the rest of the sheet including the core layer itself.

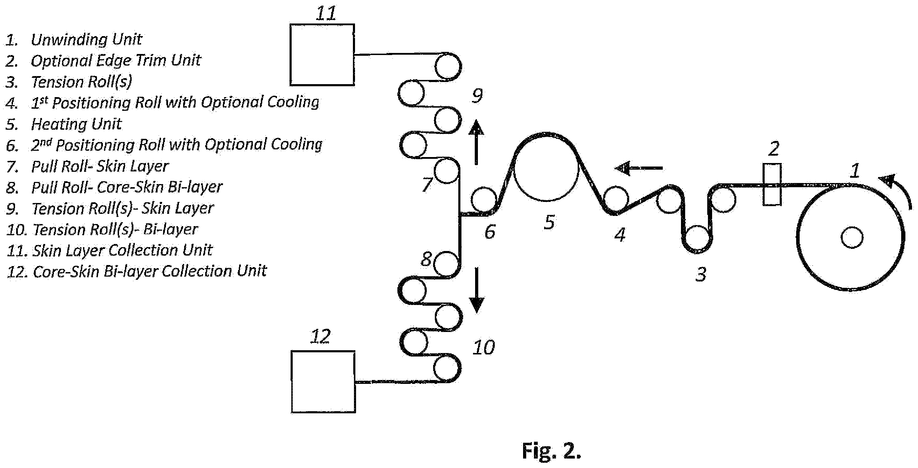

As illustrated in **Fig. 2,** the device may be comprised of (**1**) an unwinding unit, (**2**) an optional edge trim unit, (**3**) one or more tension roll(s), (**4**) a positioning roll with optional cooling, (**5**) a heating or annealing unit, (**6**) a further or second positioning roll with optional cooling, (**7**) a first layer pull-roll for the first or skin layer, (**8**) a remainder pull-roll for the remainder of the sheet, which is typically a core-skin bi-layer, (**9**) one or more tension roll(s) for **the first or** skin layer, (**10**) one or more tension roll(s) for the remainder of the sheet, typically the core-skin bi-layer, (**11**) a skin layer collection unit, which may be a winder, a container with or without a nip system, or a granulator, and (**12**) a core-skin bi-layer collection unit, which may be a winder, a container with or without a nip system, or a granulator.

**The unwinding unit (1)** may be either motorized or non-motorized and is ideally capable of handling, for example, up to 1.4 m of roll width and 500 kg of roll weight.

**The optional edge trim unit (2)** can trim either side of the sheet or both sides of the sheet, if needed, along the machine-direction of the sheet before the sheet is transferred to the heating unit (**5**), in order to keep the sheet width consistent, to separate and collect only the desired portion of the sheet, and to prevent tearing from the edges. Such cases would include but would not be limited to, trimming a gradient portion of the sheet, or trimming an edge of the sheet where there is no core layer. In general, trimming at least about 25 mm from each edge by fixed blades may be helpful. This can be either done before the roll is placed on the unwinding unit (**1**), or at any point between the unwinding unit (**1**) and the heating unit (**5**).

**The one or more tension roll(s) (3)** are typically motorized so that the sheet can be pulled from the unwinding unit (**1**) and be fed to the **heating or** annealing unit (**5**). Unless the tension is properly set to flatten the sheet as it passes through the tension roll(s), the sheet may wrinkle in the cross-machine direction, causing uneven heating, leading to processing issues.

**The first positioning roll with optional cooling (4)** follows the tension rolls (**3**) and is preferably located adjacent the heating unit (**5**) or the main thermal energy source of the annealing unit (**5**), to establish adequate level of tension of the sheet before the sheet reaches the heating unit (**5**) by positioning the sheet on the correct path. For fine-tuning of the sheet temperature, this roll has optional cooling capacity. This roll is typically not motorized.

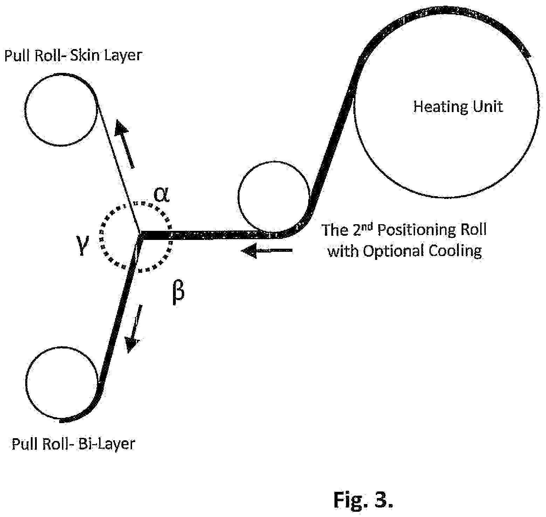

**The heating unit (5)** is in contact with either one of the skin layers or both skin layers, such that the interfacial binding energy between at least one of the skin layers and the core layer becomes lower. This facilitates one of the skin layers to be mechanically separated from the rest of the sheet, upon application of a pulling force. The thermal energy source can be either singular or multiple heated roll(s), or infrared heater(s), or any combination of both, which may be placed on one side or both sides of the sheet. For commercial operation, it is important that the sheet interface, or orientation angles as described in Fig. 3. that is mechanically separated, is maintained and stays consistent throughout the duration of operation, that is, that the first layer be the layer that is removed from the rest of the sheet throughout the operation. If not, the layer recovered at the first layer collection unit may also contain part of the remainder of the sheet, for example the core layer. And for that reason, it may be preferred that the thermal energy to the sheet is supplied mainly through conduction by a heated roll.

The temperature range of the sheet surface closest to the thermal energy source, typically the first or skin layer, may be from about 25°C to about 70°C, or from 30°C to 65°C, or from 35°C to 60°C, or as described elsewhere herein. This may be measured by IR thermometer at the exit of the heating unit. If the temperature of the sheet surface is too low, mechanical separation may not occur, and consequently the sheet may tear. If the temperature of the sheet surface is too high, the mechanical integrity of the sheet may drop, and stable operation of the mechanical separation process may be difficult. The annealing or heating unit (3) is preferably a motorized roller.

In other aspects, the temperature of the sheet surface closest to the thermal energy source achieved by the annealing unit, typically the first or skin layer, is at least about 25°C, or at least about 26°C, or at least °27C, or at least 28°C or at least 30°C, or at least 32°C, or at least 35°C, and up to about 70°C, or up to 65°C, or up to 60°C, or up to 55°C, or up to 50°C.

**The second positioning roll with optional cooling** (**6**) is located on the opposite side of the heating unit (**5**) or the main thermal energy source of the annealing unit, to establish an adequate level of tension of the sheet before the sheet reaches the point of separation, by positioning the sheet on the correct path. For fine-tuning of the sheet temperature, this roll has optional cooling capacity. The second positioning roll for optional cooling (**6**) can be a spreader roll that is designed to eliminate wrinkles of the sheet by surface action in the cross-machine direction, so that the sheet becomes wrinkle free and ready to be cleanly separated when the sheet reaches the point of separation. This roll is typically not motorized.

The multilayer sheet then becomes mechanically separated between **the first layer pull-roll for the first or skin-layer (7)** and **the remainder pull-roll for the remainder or core-skin bi-layer (8).** The first layer pull-roll for the skin-layer (7), downstream from the second positioning roll for separation, (**6**), and it takes the mechanically separated skin layer from the rest of the sheet. The remainder pull-roll for the core-skin bi-layer (**8**) is also downstream of the second positioning roll for separation, (**6**), and the heating or annealing unit (**5**), and it takes the remainder, or core-skin bi-layer.

For commercial operation, it is important that the sheet interface, or orientation angles as described in Fig. 3, that is mechanically separated, is maintained and stays consistent throughout the duration of operation, that is, that the first layer be the layer that is removed from the rest of the sheet throughout the continuous operation. If not, the layer recovered at the first layer collection unit may also contain part of the remainder of the sheet, for example the core layer.

As illustrated in Fig. 3, according to the invention, the angle $\alpha$ is the angle defined by the first layer and the multilayer sheet at the separation point, after the sheet departs the $2^{nd}$ positioning roll. The angle $\beta$ is the angle defined by the multilayer sheet and the remainder of the multilayer sheet at the separation point, after the sheet departs the $2^{nd}$ positioning roll. Also as depicted in Figure 3, an angle $\gamma$ is depicted that is defined by the first layer and the remainder of the multilayer sheet, after the separation point. As depicted, the sum of the three angles, $\alpha + \beta + \gamma$, is 360°.

According to the invention, it is important that the angle $\alpha$ is equal to or smaller than the angle $\beta$, especially the latter, and such condition is maintained throughout the duration of the continuous sheet separation operation. Typically, the separation machine is designed such that the angle $\gamma$ is equal to or smaller than 180°, and equal to or larger than 30° throughout the duration of the continuous sheet separation operation.

Thus, according to the invention, the angle $\alpha$ may be, for example, from about 30 to about 150°, or from about 35 to about 160°, or from about 40° to about 165°. Further, the angle $\beta$ may be, for example, from about 90° to about 180°, or from about 95° to from about 150°, or from 100° to 120°. Likewise, the angle $\gamma$ may be from about 30° to about 180°, or from 45 to 150°, or from 50 to 120°

In other aspects, the angles according to the invention may be as follows, with the delta being the difference $\beta$ minus $\alpha$:

$$\gamma = 180°; \alpha = 60°; \beta = 120° \qquad \Delta 60°$$
$$\gamma = 150°; \alpha = 90°; \beta = 120° \qquad \Delta 30°$$
$$\gamma = 120°; \alpha = 90°; \beta = 150° \qquad \Delta 60°$$
$$\gamma = 100°; \alpha = 80°; \beta = 180° \qquad \Delta 100°.$$

To minimize sheet wrinkling after the mechanical separation, the distance between **the first pull-roll for the skin-layer (7)** and **the remainder pull-roll for the core-skin bi-layer (8),** defined as the distance between the centers of the two rolls (7) and (8), may be, for example, less than 50 % that of the width of the sheet that is being processed. We define this number as $\psi$. It may be more desirable if $\psi$ is less than 30 %, or less than 20 %, or less than 15 %.

In addition, the first pull-roll for the skin layer (7) and the remainder pull-roll (8) can be spreader rolls to prevent wrinkles from forming on the mechanically separated layers.

When we say "spreader rolls," we mean rolls designed to eliminate wrinkles by surface action in the cross-machine direction.

**The tension roll(s)- skin layer (9)** are preferably motorized in sync with the first pull-roll for skin-layer (**7**), just as the **tension roll(s)- core-skin bi-layer (10)** are preferably motorized in sync with the remainder pull-roll for the core-skin bi-layer (**8**), in order to assist in driving the whole mechanical separation process, and to stably transfer the separated first or skin layer and the remainder or core-skin bi-layer to **the skin layer collection unit (11)** and **the core-skin bi-layer collection unit (12),** respectively.

**The skin layer collection unit (11)** can be either a motorized winder, or a granulator, or a container. This is where the recovered skin layer is collected for re-use in extrusion. Alternatively, the skin layer can be merely collected in a container or the like for further processing, with or without a nip system that feeds the sheet stably into the container.

**The core-skin bi-layer collection unit (12)** also can be either a motorized winder, or a pelletizer, or a container. The collected core-skin bi-layer may be re-used in extrusion, or further mechanically processed or transferred for use in chemical recycling. Similarly, the core-skin bilayer can be merely collected in a container or the like for further processing, with or without a nip system that feeds the sheet stably into the container.

The range of total sheet thickness processible on the device disclosed herein is typically from about 0.254 mm to about 5.080 mm, or from 0.508-2.540 mm, or from 0.762-1.270 mm.

The operational speed at which such mechanical separation takes place on the device disclosed herein may be, for example, **from about** 2 to about 20 m/min, or from 5 to 10 m/min, based on the sheet unwinding speed. Both pull rolls run 1.1-2.5 times faster than the unwinding speed, in other words, 2.2 to 50 m/min, or 5.5 to 25 m/min, is the operational speed at the separation point.

We note that, in a multilayer poly(vinyl acetal) sheet, the surface of the first layer that was in contact with the remainder of the multilayer sheet is smoother than are the outer faces of the multilayer sheet, due to subsequent embossing and/or melt fracture that occurs on the outside surfaces of the multilayer sheet as the sheet exits the extruder die. Thus, the present disclosure also relates to sheets, and methods of manufacturing them, that exhibit a rough surface on an outer surface, for example due to melt fracture, and exhibit a smoother surface on what was the inner surface of the sheet during extrusion, since it is neither embossed nor subject to melt fracture.

Referring again to Figure 3, the first skin layer is the film or sheet of interest, and exhibits melt fracture on the surface that faces angle $\alpha$, while having a smooth surface on the surface that faces angle $\gamma$.

U.S. Pat. Publn. No. 2008/0254302 describes multiple layer polymer interlayers having a melt-fractured surface. A particular problem encountered with multiple layer interlayers may arise at the lamination stage of processing. While single layer interlayers have conventionally been embossed with rollers to impart a texture that facilitates deairing, three-layer interlayers having a relatively soft inner layer between two relatively stiffer layers, such as is found in some acoustic interlayers, will develop optical distortion if embossing of the outer surfaces of the interlayer is transferred to the inner, softer layer. European application EP 0 710 545 A1 details this problem and cautions against embossing too deeply on the outer layers of a three-layer interlayer.

Multiple layer interlayers may be formed having surface topography that is formed by controlling the melt fracture that occurs at the exposed surface of the interlayer, or individual layers of the multiple layer interlayer, during formation of the interlayer.

As used herein, the terms "multilayer" and "multiple layers" mean an interlayer having more than one layer, and multilayer and multiple layer may be used interchangeably. The layers of the interlayer are generally produced by mixing a polymer resin such as poly(vinyl butyral) with one or more plasticizers and melt processing the mix into a sheet by any applicable process or method known to one of skill in the art, including, but not limited to, extrusion, with the layers being combined by processes such as co-extrusion and lamination. Other additional ingredients may optionally be added for various other purposes. After the interlayer sheet is formed, it is typically collected and rolled for transportation and storage and for later use in the multiple layer glass panel, as discussed below.

Multilayer interlayers, such as an interlayer having two or more layers (such as a trilayer interlayer having three

layers) can comprise at least one soft layer and at least one stiff layer. The soft layer(s) is often the inner or core layer in interlayers having at least three layers. Some terminology used throughout this application will be explained to provide a better understanding of the invention. The terms "polymer interlayer sheet." "interlayer," "polymer layer", and "polymer melt sheet" as used herein, generally may designate a single-layer sheet or a multilayered interlayer.

A "single-layer sheet," as the name implies, is a single polymer layer extruded as one layer. A multilayered interlayer, on the other hand, may comprise multiple layers, including separately extruded layers, co-extruded layers, or any combination of separately and co-extruded layers. Thus the multilayered interlayer could comprise, for example: two or more single-layer sheets combined together ("plural-layer sheet"); two or more layers co-extruded together ("co-extruded sheet"); two or more co-extruded sheets combined together; a combination of at least one single-layer sheet and at least one co-extruded sheet; a combination of a single-layer sheet and a plural-layer sheet; and a combination of at least one plural-layer sheet and at least one co-extruded sheet.

In various embodiments of the present disclosure, a multilayered interlayer comprises at least two polymer layers (e.g., a single layer or multiple layers co-extruded and/or laminated together) disposed in direct contact with each other, wherein each layer comprises a polymer resin, as detailed more fully below. As used herein for multilayer interlayers having at least three layers, "skin layer" generally refers to the outer layers of the interlayer and "core layer" generally refers to the inner layer(s). Thus, one exemplary embodiment would be: skin layer//core layer//skin layer. In the multilayer interlayers having skin layer//core layer//skin layer configuration, in some embodiments the skin layer maybe stiffer and the core layer may be softer, while in other embodiments the skin layer may be softer and the core layer may be stiffer. It should be noted, however, further embodiments include interlayers having only two layers or interlayers having more than three layers (e.g., 4, 5, 6, or up to 10 or more individual layers). Additionally, any multilayer interlayer utilized can be varied by manipulating the composition, thickness, or positioning of the layers and the like.

For example, in one trilayer polymer interlayer sheet, the two stiff (or outer or skin) layers may comprise poly(vinyl butyral) ("PVB") resin with a plasticizer or mixture of plasticizers, while the softer (inner or core) layers may comprise the same or different PVB resin or a different thermoplastic material with a the same or different plasticizer and/or mixture of plasticizers. Thus, it is contemplated that the stiff or skin layers and the soft or core layer(s) of the multilayered interlayer sheets may be comprised of the same thermoplastic material or different thermoplastic materials and the same or different plasticizer or plasticizers. Either or both layers may include additional additives as known in the art, as desired.

One type of multiple layer interlayer that utilizes softer inner layers is the multiple layer acoustic type of interlayer. As disclosed herein, acoustic interlayers comprise multiple layers, with a preferred embodiment having a relatively soft layer sandwiched between two relatively stiff layers. The resulting three-layer interlayer can generally be used in lamination processes directly in place of conventional, single layer interlayers, with little or no modification to the lamination process.

While the invention will be described herein throughout as applicable to such acoustic interlayers, it will be understood by those of skill in the art that the invention may include multiple layer interlayers-for example three-layer interlayers-having an inner polymer layer that is softer than the outer layers between which it is disposed, which includes non-acoustic multiple layer interlayers.

The invention also comprises multiple layer sheets comprising two different polymers, for example poly(vinyl butyral) and a sulfopolyester.

Deairing of multiple layer interlayers can be facilitated without any embossing, through the intentional introduction of melt fracture to the outer layers of the multiple layer interlayer. Melt fracture is typically controlled by forming the layer through a rectangular sheeting die opening formed by lands that are at a temperature less than that of the bulk of the extruding melt. This is achieved by moving conditioning fluid through channels just below the land surfaces. Melt fracture can further be controlled in one or both outer surfaces of the outer layers of the multiple layer interlayer by controlling other processing parameters of the extruded layer (see U.S. Pat. Nos. 5,455,103; 6,077,374; 5,425,977; 4,281,980; and 4,575,540, as well as Polymer Processing Instabilities: Control and Understanding, Edited by Savvas Hatzikiriakos and Kalman Migler, CRC Press 2004, ISBN 0824753860.

Melt fracture can thus be induced in one side of a polymer layer, for example, by extruding a polymer onto a die roll, or on two sides of a polymer layer, for example, by extruding a polymer directly into the air and then into a cooling bath.

One or both surfaces of the outer polymer layers may thus be produced using this controlled melt fracture to produce a polymer layer having a desired "roughness", or "$R_Z$". $R_Z$ is a measure of the surface topography of a polymer layer and is an indication of divergence of the surface from a plane.

As used herein, the surface roughness, or the height of particular peaks on the roughened surface from the imaginary plane of the flattened polymer interlayer sheet, is the Rz value of the surface. The surface roughness, or Rz, of the surface of a polymer interlayer sheet when described herein will be expressed in microns ($\mu$) as measured by a 10-point average roughness in accordance with DIN ES ISO-4287 of the International Organization for Standardization and ASME B46.1 of the American Society of Mechanical Engineers. Under these scales, Rz is calculated as the arithmetic mean value of the single roughness depths Rzi (i.e., the vertical distance between the highest peak and the deepest valley within a sampling length) of consecutive sampling lengths:

$$Rz = -x(Rz1 + Rz2 + \ldots + RzN)$$

Reported surface roughness Rz values were measured with a model S8P Perthometer from Mahr Corp., Cincinnati, Ohio.

According to the present disclosure, a smooth surface may be achieved on one face in which the Rz is from about 0 to about 10, or from 0.5 to 8, or from 1 to 7, while the rough surface will exhibit typically values that are from about 10 to about 150 or from 15 to 120 or from 20 to 100. Alternatively, the smooth surface may have an Rz of at least 0.01, or at least 0.1, or at least 0.2, or at least 0.5, up to about 10, or up to 9, or up to 8, or up to 7. Similarly, the rough surface may exhibit an Rz up to about 150, or up to 125, or up to 120, or up to 100, or up to 90, or up to 80, or up to 70, or up to 60, or up to 50, or at least 10, or at least 12, or at least 15, or at least 18, or at least 20, or at least 30.

A multiple layer interlayer may thus be produced, for example without embossing, in which the outer surfaces of the interlayer have an $R_Z$ value, for example, of 20 to 60, or 25 to 50, or as described elsewhere herein, that has been imparted through melt fracture. The two outer surfaces can have the same $R_Z$ value or a different value, or only one of the two outer surfaces may have the designated $R_Z$ value.

A multiple layer interlayer may also be produced, for example with embossing, in which the outer surfaces of the interlayer have an $R_Z$ value, for example, of 20 to 120, or 25 to 100, or as described elsewhere herein, that has been imparted through melt fracture.

The extruded interlayer formed from plasticized, lightly crosslinked PVB resin can be prepared with systems known to those skilled in the art by extrusion through a conventional sheeting die having water cooled die lips, i.e. by forcing molten polymer through a horizontally long, vertically narrow die opening substantially conforming in length and width to that of the sheet being formed therein. It is hypothesized that the more rubbery the polymer the greater will be its tendency to retract on itself to provide a given surface roughness on exiting the extrusion die.

For example, multiple layer interlayers may be coextruded using a multiple manifold coextrusion device such as that disclosed in U.S. Pat. Publn. No. 2008/0254302. Such a device has a first die manifold, a second die manifold, and a third die manifold. The device operates by simultaneously extruding polymer melts from each manifold toward the extrusion opening, where the multiple layer interlayer is extruded as a composite of three individual polymer layers. Layer thickness can be varied by adjusting the distance between the die lips at the extrusion opening. Melt fracture may be controlled though control of the composition of the melts, the temperature of the die lips or lands at the extrusion opening, or through control of the rate and method of cooling of the extruded interlayer, which can be, for example, immersed in a cooling bath soon after extrusion. According to the present disclosure, the desired film having a rough surface and a smooth surface on opposite sides may be obtained using the separation techniques described herein.

The present disclosure relates also to poly(vinyl acetal) films that may be made by a process comprising: forming at least a first polymer melt comprising poly(vinyl butyral) and a second polymer melt comprising a sulfopolyester; coextruding at least the first polymer melt and the second polymer melt to form a multilayer interlayer comprising a first layer and a remainder of the multilayer sheet comprising a second layer, wherein the multilayer sheet has a surface roughness on outer faces thereof that is imparted by melt fracture during the coextruding; and thereafter separating the first layer from the remainder of the multilayer interlayer sheet by dissolving the sulfopolyester.

When a sulfopolyester is extruded in this fashion with the poly(vinyl acetal) layer, the sulfpolyester may thus be dissolved or washed away with water or another solvent. Sulfopolyesters suitable for use according to the present disclosure include those having a glass transition temperature (Tg) of at least 25°C., and may comprise, for example, those having (A) residues of one or more dicarboxylic acids; (B) from about 4 to about 40 mole %, based on the total repeating units, of residues of at least one sulfomonomer having 2 functional groups and one or more sulfonate groups attached to an aromatic or cycloaliphatic ring wherein the functional groups are hydroxyl, carboxyl, or a combination thereof; (C) one or more diol residues wherein at least 25 mole %, based on the total diol residues, is a poly(ethylene glycol) having a structure $H(OCH_2CH_2)_nOH$ wherein n is an integer in the range of about 2 to about 500; and (D) 0 to about 25 mole %, based on the total repeating units, of residues of a branching monomer having 3 or more functional groups wherein the functional groups are hydroxyl, carboxyl, or a combination thereof. The sulfopolyester may optionally include a water-dispersible polymer blended with the sulfopolyester. Other suitable water-dispersible sulfopolyesters useful according to the present disclosure include those disclosed and claimed in U.S. Pat. Nos. 6,171,685; 5,543,488; 5,853,701; 4,304,901; 6,211,309; 5,570,605; 6,428,900; and 3,779,993.

Start-up of the mechanical separation device already described may be carried out as follows: [a] From the center of the tip of the tri-layer interlayer sheet, cut the sheet diagonally toward both directions, one at a time, making the tip of the sheet an arrow shape, [b] Manually peel off one skin layer from a tri-layer interlayer sheet on the tip of the arrow shape, then continue the separation of the sheet for ~25 cm, [c] Manually press the separated first skin layer and the core-skin bi-layer firmly onto the pull-roll for skin layer (7) and the pull-roll for core-skin bi-layer (8), respectively, and initiate thread up by very slowly jogging the machine, for example, slower than 1.0 m/min, [d] Thread up the skin layer through the Pull-roll for skin layer (7) and to the Tension roll(s)- skin layer (9), [e] Thread up the core-skin bi-layer through the Pull-roll for core-skin bi-layer (8) and to the Tension roll(s)-Core-skin bi-layer (10), [f] Jog all the motorized rolls to make sure a stable process is established, and [g] Increase the speed to the target and reach steady-state.

Another approach to initiate the mechanical separation is to attach a "pre-liner" to the skin layers in the multilayer sheet. The pre-liner is a piece of sheet that has preferably the same composition and width as the skin layer material, and is of sufficient length to reach the pull rolls when guided through the separation unit so that pull rolls can exert pulling force. In case of poly(vinyl butyral) interlayers, the pre-liners can be attached to the skin layer material by melting or gluing. Two pre-liners can be attached to the multilayer sheet, one pre-liner on each skin layer, by using a heat seal device that applies appropriate amounts of heat and pressure to a stack of pre-liner, multilayer interlayer and pre-liner. Applying too much heat or pressure will inhibit separation. When too little heat or pressure is applied, the pre-liners will release from the skin layer surface and initiation fails.

Alternatively to using heat and pressure to fuse the pre-liner surfaces with skin layer surfaces, an appropriate solvent can be applied on the surface of the pre-liner or multilayer skin, before pressing the two surfaces together and allowing the solvent to evaporate or diffuse into the materials. The pre-liners should be attached sufficiently close to the end of the multilayer sheet if initiation is to succeed this way.

Other means and methods can be applied to initiate the separation process, for example vacuum can be used to have pulling levers attached to the skin surfaces, with sufficient force to enable successful initiation of the continuous process.

It will be understood that, once at steady state, the multilayer interlayer sheet travels through the device as follows. The sheet is unwound from the unwinding unit **1** and the optional edge trim unit **2,** then passes through the tension rolls **3** at ambient temperature before reaching the first positioning roll **4.** The first positioning roll with optional cooling **4** may be chilled to a temperature, for example, of approximately ambient, or at the temperature coming from a water tap, or from about 10°C to about 30°C, or from 15°C to 30°C, or from 20°C to 25°C, so as to bring the surfaces of the sheet to a temperature, for example, from about 15°C to about 30°C, or from 20°C to 25°C.

The sheet then is contacted with the heating unit **5,** preferably a heated roll that heats the sheet surface closest to the thermal energy source to a temperature from about 35°C to about 80°C, or from 43°C to 75°C, or from 45°C to 65°C, or as described elsewhere herein.

After the sheet is heated by the heating unit **5,** the sheet then is conveyed to the second positioning roll with optional cooling **(6),** located on the opposite side of the heating unit (**5**) or the main thermal energy source of the heating unit (**5**), from the first positioning roll. The second positioning roll **6** may be chilled to a temperature, for example as described above, to cause the surface of the sheet to have a temperature from about 5°C to about 40°C, or from 10°C to 30°C, or from 12°C to 35°C. Alternatively, surface of the sheet that is in contact with the second positioning roll **6** may be cooled to a temperature of at least 5°C, or at least 10°, or at least 12°C, or at least 15°C, up to about 40°C, or up to 35°C, or up to 30°C.

After the sheet passes across the second positioning roll **6,** the multilayer sheet is mechanically separated by the first layer being pulled by the first pull-roll for skin layer **7** and the remainder of the sheet being pulled by the remainder pull-roll **8,** with the orientation as already described. This mechanical separation, as noted, is begun during start-up, after which the methods of the present invention ensure that the two layers continue to be cleanly separated during continuous operation.

As noted, in order to minimize sheet wrinkling after the mechanical separation, in one aspect the distance between the first layer pull-roll for the skin-layer **7** and the remainder pull-roll for the core-skin bi-layer **8,** defined as the distance between the centers of the two rolls **7** and **8,** is less than about 30 % that of the width of the sheet that is being processed. It may be more desirable if the number is less than 25 %, or less than 20 %, or less than 15 %.

As noted, in a significant aspect, the multilayer interlayer sheet comprises a multilayer PVB interlayer, for example having a skin/core/skin cross-section. Although a particular PVB interlayer has just been described, a variety of interlayer materials may be used.

When the interlayers comprise polyvinyl butyral (PVB), the PVB resin may be produced by known acetalization processes by reacting polyvinyl alcohol ("PVOH") with butyraldehyde in the presence of an acid catalyst, separation, stabilization, and drying of the resin. Such acetalization processes are disclosed, for example, in U.S. Pat. Nos. 2,282,057 and 2,282,026 and Vinyl Acetal Polymers, in Encyclopedia of Polymer Science & Technology, 3rd edition, Volume 8, pages 381-399, by B.E. Wade (2003). The resin is commercially available in various forms, for example, as Butvar® Resin from Solutia Inc., a wholly owned subsidary of Eastman Chemical Company.

As used herein, residual hydroxyl content (calculated as %vinyl alcohol or %PVOH by weight) in PVB refers to the amount of hydroxyl groups remaining on the polymer chains after processing is complete. For example, PVB can be manufactured by hydrolyzing poly(vinyl acetate) to polyvinyl alcohol (PVOH), and then reacting the PVOH with butyraldehyde. In the process of hydrolyzing the poly(vinyl acetate), typically not all of the acetate side groups are converted to hydroxyl groups. Further, reaction with butyraldehyde typically will not result in all hydroxyl groups being converted to acetal groups. Consequently, in any finished PVB resin, there typically will be residual acetate groups (as vinyl acetate groups) and residual hydroxyl groups (as vinyl hydroxyl groups) as side groups on the polymer chain. As used herein, residual hydroxyl content and residual acetate content is measured on a weight percent (wt.%) basis per ASTM D1396.

The PVB resins of the present disclosure typically have a molecular weight of greater than 50,000 Daltons, or less than 500,000 Daltons, or about 50,000 to about 500,000 Daltons, or about 70,000 to about 500,000 Daltons, or about 100,000 to about 425,000 Daltons, as measured by size exclusion chromatography using low angle laser light scattering. As used herein, the term "molecular weight" means the weight average molecular weight.

Various adhesion control agents ("ACAs") can be used in the interlayers of the present disclosure to control the adhesion of the interlayer sheet to glass. In various embodiments of interlayers of the present disclosure, the interlayer can comprise about 0.003 to about 0.15 parts ACAs per 100 parts resin; about 0.01 to about 0.10 parts ACAs per 100 parts resin; and about 0.01 to about 0.04 parts ACAs per 100 parts resin. Such ACAs, include, but are not limited to, the ACAs disclosed in U.S. Patent No. 5,728,472 (the entire disclosure of which is incorporated herein by reference), residual sodium acetate, potassium acetate, magnesium bis(2-ethyl butyrate), and/or magnesium bis(2-ethylhexanoate).

Other additives may be incorporated into the interlayer to enhance its performance in a final product and impart certain additional properties to the interlayer. Such additives include, but are not limited to, dyes, pigments, stabilizers (*e.g.*, ultraviolet stabilizers), antioxidants, antiblocking agents, flame retardants, IR absorbers or blockers (*e.g.*, indium tin oxide, antimony tin oxide, lanthanum hexaboride ($LaB_6$) and cesium tungsten oxide), processing aides, flow enhancing additives, lubricants, impact modifiers, nucleating agents, thermal stabilizers, UV absorbers, dispersants, surfactants, chelating agents, coupling agents, adhesives, primers, reinforcement additives, and fillers, among other additives known to those of ordinary skill in the art.

Although the embodiments described refer to the polymer resin as being PVB, it would be understood by one of ordinary skill in the art that the polymer may be any polymer suitable for use in a multiple layer panel. Typical polymers include, but are not limited to, polyvinyl acetals (PVA) (such as poly(vinyl butyral) (PVB) or isomeric poly(vinyl isobutyral) (PVisoB), polyurethane (PU), poly(ethylene-co-vinyl acetate) (EVA), polyvinylchloride (PVC), poly(vinylchloride-co-methacrylate), polyethylenes, polyolefins, ethylene acrylate ester copolymers, poly(ethylene-co-butyl acrylate), silicone elastomers, epoxy resins, and acid copolymers such as ethylene/carboxylic acid copolymers and its ionomers, derived from any of the foregoing possible thermoplastic resins, combinations of the foregoing, and the like. PVB and its isomeric polymer PVisoB, polyvinyl chloride, and polyurethane are particularly useful polymers generally for interlayers; PVB (and its isomeric polymer) is particularly preferred.

In a further aspect, the interlayer can be a multilayered interlayer. For example, the multilayered interlayer can consist of PVB//PVisoB//PVB. Other examples include PVB//PVC//PVB or PVB//PU//PVB. Further examples include PVC//PVB//PVC or PU//PVB//PU. Alternatively, the skin and core layers may all be PVB using the same or different starting PVB resins.

In one aspect, the first or skin layer of the multilayer interlayer sheet comprises a PVB polymer having a Tg, for example, from about 20°C to about 45°C, or from 25°C to 40°C, or from 28°C to 35°C. Alternatively, the Tg of the poly(vinyl butyral) may be at least about 20°C or at least 25°C, or at least 28°C, up to about 45°C, or up to 40°C, or up to 35°C.

In an aspect, the Tg of the layer adjacent to the first layer may be at least 12°C lower, or at least 15°C lower, or at least 20°C lower, or at least 30° lower than the Tg of the first layer.

Unless otherwise indicated, all numbers expressing quantities of ingredients, properties such as molecular weight, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, each numerical parameter should at least be construed in light of the number of reported significant digits and by applying ordinary rounding techniques. Further, the ranges stated in this disclosure and the claims are intended to include the entire range specifically and not just the endpoint(s). For example, a range stated to be 0 to 10 is intended to disclose all whole numbers between 0 and 10 such as, for example 1, 2, 3, 4, etc., all fractional numbers between 0 and 10, for example 1.5, 2.3, 4.57, 6.1113, etc., and the endpoints 0 and 10.

Notwithstanding that the numerical ranges and parameters setting forth the broad scope of the invention are approximations, the numerical values set forth in the specific examples are intended to be reported precisely in view of methods of measurement. Any numerical value, however, inherently contains certain errors necessarily resulting from the standard deviation found in their respective testing measurements.

It is to be understood that the mention of one or more process steps does not preclude the presence of additional process steps before or after the combined recited steps or intervening process steps between those steps expressly identified. Moreover, the denomination of process steps, ingredients, or other aspects of the information disclosed or claimed in the application with letters, numbers, or the like is a convenient means for identifying discrete activities or ingredients and the recited lettering can be arranged in any sequence, unless otherwise indicated.

As used herein, the singular forms "a", "an", and "the" include plural referents unless the context clearly dictates otherwise. For example, reference to a $C_n$ alcohol equivalent is intended to include multiple types of $C_n$ alcohol equivalents. Thus, even use of language such as "at least one" or "at least some" in one location is not intended to imply that other uses of "a", "an", and "the" excludes plural referents unless the context clearly dictates otherwise. Similarly, use of the language such as "at least some" in one location is not intended to imply that the absence of such language in other places implies that "all" is intended, unless the context clearly dictates otherwise.

As used herein the term "and/or", when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

This invention can be further illustrated by the following examples of embodiments thereof, although it will be understood that these examples are included merely for purposes of illustration and are not intended to limit the scope of the invention as defined in the appended claims.

**EXAMPLES**

**Example 1**

A mechanical separation device as depicted in Figure 2 was operated to mechanically separate a skin layer and core-skin bi-layer of a 1 . 2 m wide flat tri-layer PVB interlayer sheet with 0.813 mm thickness across the cross-machine direction of the sheet, with the following conditions:

Unwinding Speed: 12 m/min

1st Skin Pull-roll Speed (speed at separation): 25 m/min

Edge trimmed: No

Temperature of the sheet at the exit of the annealing unit: 38°C

$\psi$ [Distance between the two pull rolls / Sheet width]: 15 %

$\alpha = 60°$

$\beta = 120°$

$\gamma = 180°$

The operation was stable with no sheet tearing. The separating interface stayed consistent and the skin layer was unwrinkled.

**Example 2**

A mechanical separation device as depicted in Figure 2 was operated to mechanically separate a skin layer and core-skin bi-layer of 1.2 m wide wedge tri-layer PVB interlayer sheet with 0.838-1.143 mm thickness across the cross-machine direction of the sheet, with the following conditions:

Unwinding Speed: 5 m/min
1st Skin Pull-roll Speed (separation speed): 10 m/m in
Edge trimmed: Yes
Temperature of the sheet at the exit of the annealing unit: 35°C
$\psi$ [Distance between the two pull rolls / Sheet width]: 30 %
$\alpha = 90°$
$\beta = 120°$
$\gamma = 150°$

The operation was stable with no sheet tearing. The separating interface stayed consistent and the skin layer was unwrinkled.

**Example 3**

A mechanical separation device as depicted in Figure 2 was operated to mechanically separate a skin layer and core-skin bi-layer of 1 . 2 m wide flat tri-layer PVB interlayer sheet with 0.813 mm thickness across the cross-machine direction of the sheet, containing 24 cm gradient wide band in one of the skins, with the following conditions:

Unwinding Speed: 5 m/min
1st Skin Pull-roll Speed (separation speed): 10 m/min
Edge trimmed: No
Temperature of the sheet at the exit of the annealing unit: 35°C
ψ [Distance between the two pull rolls / Sheet width]: 30 %
α = 90°
β = 150°
γ = 120°

The operation was stable with no sheet tearing. The separating interface stayed consistent and the skin layer was unwrinkled.

## Example 4

A mechanical separation device as depicted in Figure 2 was operated to mechanically separate a skin layer and core-skin bi-layer of 1 . 2 m wide flat tri-layer PVB interlayer sheet with 0.813 mm thickness across the cross-machine direction of the sheet, with the following conditions:

Unwinding Speed: 10 m/min
1st Skin Pull-roll Speed (separation speed): 24 m/min
Edge trimmed: No
Temperature of the sheet at the exit of the annealing unit: 45°C
ψ [Distance between the two pull rolls / Sheet width]: 15 %
α = 80°
β = 180°
γ = 100°

The operation was stable with no sheet tearing. The separating interface stayed consistent and the skin layer was unwrinkled.

## Example 5

A mechanical separation device as depicted in Figure 2 was operated, as before, to mechanically separate a skin layer and core-skin bi-layer of 1 . 2 m wide flat tri-layer PVB interlayer sheet with 0.813 mm thickness across the cross-machine direction of the sheet, with the following conditions:

Unwinding Speed: 2 m/min
1st Skin Pull-roll Speed (separation speed): 5 m/min
Edge trimmed: Yes
Temperature of the sheet at the exit of the annealing unit: 40°C
y [Distance between the two pull rolls / Sheet width]: 15 %

In this example, the angles were changed such that the previous angle described as α was greater than the angle previously described as β, according to the following:

α = 120°

β = 60°

γ = 180°

The operation was stable, but the skin layer went into the previously described bilayer collection unit, since the angle defined as α was greater than the angle defined as β.

## Example 6

A mechanical separation device as depicted in Figure 2 was operated to mechanically separate a skin layer and core-skin bi-layer of 1.4 m flat tri-layer PVB interlayer sheet with 0.813 mm thickness across the cross-machine direction of the sheet, with the following conditions:

Unwinding Speed: 2 m/min
1st Skin Pull-roll Speed (separation speed): 5 m/min
Edge trimmed: Yes
Temperature of the sheet at the exit of the annealing unit: 38°C
$\psi$ [Distance between the two pull rolls / Sheet width]: 15 %

In this example, the angles were changed such that the previous angle described as $\alpha$ was greater than the angle previously described as $\beta$, according to the following:

$\alpha$ = 120°

$\beta$ = 90°

$\gamma$ = 150°

The operation was unstable with the core layer frequently shifting sides, due to our attempts to correctly direct the skin layer to the skin layer collection unit. It was impossible to achieve steady state, in which the 1st skin layer consistently went into the desired skin layer collection unit.

**Example 7**

A mechanical separation device as depicted in Figure 2 was operated to mechanically separate a skin layer and core-skin bi-layer of 1 . 2 m wide flat tri-layer PVB interlayer sheet with 0.813 mm thickness across the cross-machine direction of the sheet, with the following conditions:

Unwinding Speed: 2 m/min
1st Skin Pull-roll Speed (separation speed): 5 m/min
Edge trimmed: Yes
Temperature of the sheet at the exit of the annealing unit: 20°C
$\psi$ [Distance between the two pull rolls / Sheet width]: 15 %
$\alpha$ = 90°
$\beta$ = 120°
$\gamma$ = 150°

The operation was not very stable due to sporadic sheet tearing started from an edge of the sheet, the core layer frequently shifting sides, due to the lower temperature.

**Example 8**

A mechanical separation device as depicted in Figure 2 was operated to mechanically separate a skin layer and core-skin bi-layer of 0.4 m wide flat tri-layer PVB interlayer sheet with 0.813 mm thickness across the cross-machine direction of the sheet, with the following conditions:

Unwinding Speed: 2 m/min
1st Skin Pull-roll Speed (separation speed): 5 m/min
Edge trimmed: No
Temperature of the sheet at the exit of the annealing unit: 38°C
$\psi$ [Distance between the two pull rolls / Sheet width]: 70 %
$\alpha$ = 90°
$\beta$ = 120°
$\gamma$ = 150°

The operation could be established but the separated 1st skin had a lot of wrinkles as it went to the skin layer collection unit, due to the higher $\psi$ value.

### Example 9

A mechanical separation device as depicted in Figure 2 was operated to mechanically separate a skin layer and core-skin bi-layer of 1 . 2 m wide flat tri-layer PVB interlayer sheet with 0.813 mm thickness across the cross-machine direction of the sheet, with the following conditions:

Unwinding Speed: 2 m/min
1st Skin Pull-roll Speed (separation speed): 5 m/min
Edge trimmed: Yes
Temperature of the sheet at the exit of the annealing unit: 75°C
$\psi$ [Distance between the two pull rolls / Sheet width]: 30 %
$\alpha$ = 90°
$\beta$ = 120°
$\gamma$ = 150°

The operation was unstable with frequent sheet tearing due to the higher temperature than optimal. It was impossible to achieve steady state.

**Table 1.**

| | | Unwind Speed (m/min) | 1st Skin Pull-roll Speed (m/min) | Sheet Surface Temperature (°C) | a (deg) | $\beta$ (deg) | $\gamma$ (deg) | $\Delta$ (b-$\alpha$) (deg) | y (%) | Stable Separation Process |
|---|---|---|---|---|---|---|---|---|---|---|
| Example 1 | | 12 | 25 | 38 | 60 | 120 | 180 | 60 | 15 | Yes |
| Example 2 | | 5 | 10 | 35 | 90 | 120 | 150 | 30 | 30 | Yes |
| Example 3 | | 5 | 10 | 40 | 90 | 150 | 120 | 60 | 30 | Yes |
| Example 4 | | 10 | 24 | 45 | 80 | 180 | 100 | 100 | 15 | Yes |
| Example 5 | | 2 | 5 | 40 | 120 | 60 | 180 | -60 | 15 | No |
| Example 6 | | 2 | 5 | 38 | 120 | 90 | 150 | -30 | 15 | No |
| Example 7 | | 2 | 5 | 20 | 90 | 120 | 150 | 30 | 15 | No |
| Example 8 | | 2 | 5 | 38 | 60 | 120 | 180 | 60 | 70 | Yes, with wrinkles |
| Example 9 | | 2 | 5 | 75 | 150 | 90 | 120 | 30 | 30 | No |

### Examples 10a-c. Methods of producing sheets having a smooth surface and a rough surface.

### Example 10a.

A multilayer PVB sheet having an embossed skin was separated by hand and had the following characteristics within one hour following separation:

Rough surface: Rz = 40.8

Smooth (interior) surface: Rz = 1.2

**Example 10b.**

A multilayer PVB sheet having a skin subjected to melt fracture during extrusion was separated by hand and had the following characteristics within one hour following separation:

Rough surface: Rz = 14.6

Separated Skin Interior: Rz = 1.3

**Example 10c.**

A multilayer PVB sheet having a skin subjected to melt fracture during extrusion was separated by hand and had the following characteristics within one hour following separation:

Outer Rough Skin: Rz = 64.9

Smooth Interior surface: Rz = 2.3

**Claims**

1. A continuous process for separating a first layer from a remainder of a multilayer interlayer sheet comprising a multilayer PVB interlayer, the process comprising:

   a. heating the multilayer sheet; and
   b. thereafter separating the first layer from the remainder of the multilayer interlayer sheet by pulling the first layer and the remainder of the multilayer interlayer sheet in different directions,

   wherein an angle $\alpha$ defined by the first layer and the multilayer sheet at the separation point is smaller than or equal to an angle $\beta$ defined by the multilayer sheet and the remainder of the multilayer sheet at the separation point, during the continuous process.

2. The continuous process of claim 1, wherein the multilayer sheet is heated to a temperature from about 25°C to about 70°C;
   wherein an angle $\gamma$ is defined by the first layer and the remainder of the multilayer sheet at the separation point, wherein the following formulas are satisfied:

$$\beta/\alpha \geq 1$$

$$30° \leq \gamma \leq 180°$$

$$\alpha + \beta + \gamma = 360°;$$

   and
   wherein an orientation of the directions is maintained during the continuous process.

3. The continuous process of claim 1, wherein the multilayer sheet comprises a poly(vinyl acetal) and the multilayer sheet is heated to a temperature from about 25°C to about 70°C .

4. The continuous process of claim 1, wherein the angle $\alpha$ is smaller than the angle $\beta$ during the continuous process.

5. The process of any of the preceding claims, wherein the angle $\alpha$ is at least 50 degrees smaller than the angle $\beta$.

6. The process of any of the preceding claims, wherein the angle $\alpha$ is from about 30 degrees to about 75 degrees smaller than the angle $\beta$.

7. The process of any of the preceding claims, wherein the first layer comprises a poly(vinyl butyral) polymer having a Tg from about 25°C to about 40°C.

8. The process of any of the preceding claims, wherein the multilayer sheet is heated in step a) to a temperature from 30°C to 70°C.

9. The process of any of the preceding claims, wherein at least a portion of the remainder of the multilayer sheet comprises a poly(vinyl butyral) polymer having a Tg that is at least 15°C lower than the Tg of the first layer.

10. The process of any of the preceding claims, wherein, in the separating step, the first layer is pulled by a first layer pull-roll and the remainder of the multilayer interlayer sheet is pulled by a remainder pull roll, and
wherein a distance between the first layer pull-roll and the remainder pull-roll is maintained, that is less than about 50% of the width of the sheet, while the separating occurs.

11. The process of any of the preceding claims, wherein the distance between the first layer pull-roll and the remainder pull-roll is less than about 15% of the width of the sheet, while the separating occurs.

12. The process of any of the preceding claims, wherein the multilayer sheet comprises a core layer, with a skin layer on each side.

13. The process of any of the preceding claims, wherein a first end of the multilayer sheet is thicker than a second end of the multilayer sheet, with the ends being defined across a machine direction.

14. The process of any of the proceding claims, wherein a first end of the multilayer sheet is thicker than a second end of the multilayer sheet.

**Patentansprüche**

1. Kontinuierliches Verfahren zum Trennen einer ersten Schicht vom Rest einer mehrschichtigen Zwischenschichtfolie, umfassend eine mehrschichtige PVB-Zwischenschicht, wobei das Verfahren:

a. das Erwärmen der mehrschichtigen Folie und
b. danach das Trennen der ersten Schicht vom Rest der mehrschichtigen Zwischenschichtfolie durch Ziehen der ersten Schicht und des Restes der mehrschichtigen Zwischenschichtfolie in verschiedene Richtungen umfasst, wobei ein Winkel $\alpha$, definiert von der ersten Schicht und der mehrschichtigen Folie am Trennpunkt, während des kontinuierlichen Verfahrens kleiner als ein oder gleich einem Winkel $\beta$, definiert von der mehrschichtigen Folie und dem Rest der mehrschichtigen Folie am Trennpunkt, ist.

2. Kontinuierliches Verfahren nach Anspruch 1, wobei die mehrschichtige Folie auf eine Temperatur von etwa 25 °C bis etwa 70 °C erwärmt wird;
wobei ein Winkel $\gamma$ von der ersten Schicht und dem Rest der mehrschichtigen Folie am Trennpunkt definiert wird, wobei die folgenden Formeln erfüllt werden:

$$\beta/\alpha \geq 1$$

$$30° \leq \gamma \leq 180°$$

$$\alpha + \beta + \gamma = 360°$$

und
wobei die Orientierung der Richtungen während des kontinuierlichen Verfahrens beibehalten wird.

3. Kontinuierliches Verfahren nach Anspruch 1, wobei die mehrschichtige Folie ein Poly(vinylacetal) umfasst und die mehrschichtige Folie auf eine Temperatur von etwa 25 °C bis etwa 70 °C erwärmt wird.

4. Kontinuierliches Verfahren nach Anspruch 1, wobei der Winkel α während des kontinuierlichen Verfahrens kleiner als der Winkel β ist.

5. Verfahren nach einem der vorstehenden Ansprüche, wobei der Winkel α mindestens 50 Grad kleiner ist als der Winkel β.

6. Verfahren nach einem der vorstehenden Ansprüche, wobei der Winkel α etwa 30 Grad bis etwa 75 Grad kleiner ist als der Winkel β.

7. Verfahren nach einem der vorstehenden Ansprüche, wobei die erste Schicht ein Poly(vinylbutyral)polymer mit einer Tg von etwa 25 °C bis etwa 40 °C umfasst.

8. Verfahren nach einem der vorstehenden Ansprüche, wobei die mehrschichtige Folie in Schritt a) auf eine Temperatur von 30 °C bis 70 °C erwärmt wird.

9. Verfahren nach einem der vorstehenden Ansprüche, wobei mindestens ein Abschnitt des Restes der mehrschichtigen Folie ein Poly(vinylbutyral)polymer mit einer Tg umfasst, die mindestens 15 °C niedriger ist als die Tg der ersten Schicht.

10. Verfahren nach einem der vorstehenden Ansprüche,

    wobei in dem Trennschritt die erste Schicht von einem Abziehwerk für die erste Schicht abgezogen wird und der Rest der mehrschichtigen Zwischenschichtfolie von einem Abziehwerk für den Rest abgezogen wird und wobei ein Abstand zwischen dem Abziehwerk für die erste Schicht und dem Abziehwerk für den Rest, der geringer ist als etwa 50 % der Breite der Folie, beibehalten wird, während das Trennen stattfindet.

11. Verfahren nach einem der vorstehenden Ansprüche, wobei der Abstand zwischen dem Abziehwerk für die erste Schicht und dem Abziehwerk für den Rest, während das Trennen stattfindet, geringer ist als etwa 15 % der Breite der Folie.

12. Verfahren nach einem der vorstehenden Ansprüche, wobei die mehrschichtige Folie eine Kernschicht mit einer Hautschicht auf jeder Seite umfasst.

13. Verfahren nach einem der vorstehenden Ansprüche, wobei ein erstes Ende der mehrschichtigen Folie dicker als ein zweites Ende der mehrschichtigen Folie ist, wobei die Enden über eine Maschinenrichtung definiert sind.

14. Verfahren nach einem der vorstehenden Ansprüche, wobei ein erstes Ende der mehrschichtigen Folie dicker als ein zweites Ende der mehrschichtigen Folie ist.

**Revendications**

1. Procédé continu de séparation d'une première couche d'un reste d'une feuille de couche intermédiaire multicouche comprenant une couche intermédiaire multicouche en PVB, le procédé comprenant les étapes consistant à :

   a. chauffer la feuille multicouche ; et
   b. séparer ensuite la première couche du reste de la feuille de couche intermédiaire multicouche en tirant la première couche et le reste de la feuille de couche intermédiaire multicouche dans des directions différentes,

   dans lequel un angle α défini par la première couche et la feuille multicouche au point de séparation est inférieur ou égal à un angle β défini par la feuille multicouche et le reste de la feuille multicouche au point de séparation, pendant le procédé continu.

2. Procédé continu de la revendication 1, dans lequel la feuille multicouche est chauffée à une température comprise entre environ 25°C et environ 70°C ;
   dans lequel un angle γ est défini par la première couche et le reste de la feuille multicouche au point de séparation, dans lequel les formules suivantes sont satisfaites :

$$\beta/\alpha \geq 1$$

$$30° \leq \gamma \leq 180°$$

$$\alpha + \beta + \gamma = 360° \ ;$$

et
dans lequel une orientation des directions est maintenue pendant le processus continu.

3. Procédé continu de la revendication 1, dans lequel la feuille multicouche comprend un poly(acétal de vinyle) et la feuille multicouche est chauffée à une température d'environ 25°C à environ 70°C.

4. Procédé continu de la revendication 1, dans lequel l'angle $\alpha$ est inférieur à l'angle $\beta$ pendant le procédé continu.

5. Procédé de l'une quelconque des revendications précédentes, dans lequel l'angle $\alpha$ est inférieur d'au moins 50 degrés à l'angle $\beta$.

6. Procédé de l'une quelconque des revendications précédentes, dans lequel l'angle $\alpha$ est inférieur d'environ 30 degrés à environ 75 degrés à l'angle $\beta$.

7. Procédé selon l'une quelconque des revendications précédentes, dans lequel la première couche comprend un polymère de poly(butyral de vinyle) ayant une Tg d'environ 25°C à environ 40°C.

8. Procédé de l'une quelconque des revendications précédentes, dans lequel la feuille multicouche est chauffée à l'étape a) à une température comprise entre 30°C et 70°C.

9. Procédé de l'une quelconque des revendications précédentes, dans lequel au moins une partie du reste de la feuille multicouche comprend un polymère de poly(butyral de vinyle) ayant une Tg inférieure d'au moins 15°C à la Tg de la première couche.

10. Procédé de l'une quelconque des revendications précédentes, dans lequel, lors de l'étape de séparation, la première couche est tirée par un rouleau de traction de première couche et le reste de la feuille de couche intermédiaire multicouche est tiré par un rouleau de traction de reste, et
dans lequel une distance entre le rouleau de traction de première couche et le rouleau de traction de reste est maintenue, c'est-à-dire inférieure à environ 50 % de la largeur de la feuille, pendant que la séparation se produit.

11. Procédé de l'une quelconque des revendications précédentes, dans lequel la distance entre le rouleau de traction de première couche et le rouleau de traction de reste est inférieure à environ 15 % de la largeur de la feuille, pendant que la séparation se produit.

12. Procédé de l'une quelconque des revendications précédentes, dans lequel la feuille multicouche comprend une couche centrale et une couche de peau sur chaque face.

13. Procédé de l'une quelconque des revendications précédentes, dans lequel une première extrémité de la feuille multicouche est plus épaisse qu'une deuxième extrémité de la feuille multicouche, avec les extrémités définies dans la direction de machine.

14. Procédé de l'une quelconque des revendications précédentes, dans lequel une première extrémité de la feuille multicouche est plus épaisse qu'une deuxième extrémité de la feuille multicouche.

Fig. 1.

1. Unwinding Unit
2. Optional Edge Trim Unit
3. Tension Roll(s)
4. 1st Positioning Roll with Optional Cooling
5. Heating Unit
6. 2nd Positioning Roll with Optional Cooling
7. Pull Roll- Skin Layer
8. Pull Roll- Core-Skin Bi-layer
9. Tension Roll(s)- Skin Layer
10. Tension Roll(s)- Bi-layer
11. Skin Layer Collection Unit
12. Core-Skin Bi-layer Collection Unit

Fig. 2.

Pull Roll- Skin Layer

Heating Unit

α

γ

The 2ⁿᵈ Positioning Roll
with Optional Cooling

β

Pull Roll- Bi-Layer

**Fig. 3.**

EP 4 347 262 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5368978 A
- US 5934577 A
- US 10513102 B
- US 20200147933 A1
- WO 2010038697 A1
- US 2014299278 A1
- US 4394416 A
- US 2018178458 A1
- US 5520776 A
- JP 4205889 B
- US 20080254302 A
- EP 0710545 A1
- US 5455103 A
- US 6077374 A
- US 5425977 A
- US 4281980 A
- US 4575540 A
- US 6171685 B
- US 5543488 A
- US 5853701 A
- US 4304901 A
- US 6211309 B
- US 5570605 A
- US 6428900 B
- US 3779993 A
- US 2282057 A
- US 2282026 A
- US 5728472 A

**Non-patent literature cited in the description**

- Polymer Processing Instabilities: Control and Understanding. CRC Press, 2004
- Vinyl Acetal Polymers. **B.E. WADE**. Encyclopedia of Polymer Science & Technology. 2003, vol. 8, 381-399